(19) **Europäisches Patentamt / European Patent Office / Office européen des brevets**

(11) **EP 2 214 031 A1**

(12) **EUROPEAN PATENT APPLICATION**
published in accordance with Art. 153(4) EPC

(43) Date of publication:
**04.08.2010 Bulletin 2010/31**

(51) Int Cl.:
**G01S 5/14** (2006.01)

(21) Application number: **07830667.7**

(22) Date of filing: **26.10.2007**

(86) International application number:
**PCT/JP2007/070933**

(87) International publication number:
**WO 2009/054069 (30.04.2009 Gazette 2009/18)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Panasonic Corporation**
**Kadoma-shi**
**Osaka 571-8501 (JP)**

(72) Inventors:
• **KATAYAMA, Hiroshi**
**Osaka-shi, Osaka 540-6207 (JP)**

• **MIYANO, Akifumi**
**Osaka-shi, Osaka 540-6207 (JP)**
• **KATAYAMA, Hiroshi**
**Osaka-shi, Osaka 540-6207 (JP)**
• **MURAYAMA, Kei**
**Osaka-shi, Osaka 540-6207 (JP)**
• **NOJIMA, Kazuhiro**
**Osaka-shi, Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **POSITIONING RECEIVER AND POSITIONING METHOD FOR USER EQUIPMENT**

(57) A positioning receiver and a positioning method for user equipment in which errors in the position when the position of the user equipment is calculated can be reduced even in an environment in which the user equipment moves at high speed to improve the accuracy of the position. User equipment (UE) (100) calculates the Doppler shift amount of the pseudo distance data and carrier wave between base stations (BS-1, BS-2, BS-3,&mldr;) on the basis of the communication between the base stations (BS-1, BS-2, BS-3,&mldr;) and calculates a position coordinate from the pseudo distance data between the base stations (BS-1, BS-2, BS-3,&mldr;), provided that the pseudo distance data obtained between the base stations in which the calculated Doppler shift amount is larger than a reference value is not used for the calculation of the position coordinate.

FIG.1

**Description**

Technical Field

The present invention relates to a positioning receiving apparatus and a mobile terminal positioning method for detecting the position of a mobile terminal.

Background Art

Amongst mobile communication systems for mobile telephones in recent years, GPS (Global Positioning System), established by the United States Department of Defense, is the most typical satellite positioning system to receive information transmitted from a plurality of satellites that revolves around the earth's orbit, measure the distance between a receiving-side apparatus and each satellite and calculate the current position of the receiving-side apparatus. The characteristics of this GPS include that it is possible to find the absolute position of a mobile terminal comparatively accurately without taking into account the relationship between the positions of a mobile terminal and a base station in the mobile communication system.

However, a position detecting method using this GPS is used in a system on the assumption that signals from GPS satellites can be received. Therefore, with this position detecting method, the position of the terminal in locations where GPS signals cannot be received. Further, there is also a problem that providing GPS functions in a terminal increases cost.

As a position detecting method that does not use satellites as in GPS, there is an example of a method of using the position of a base station with which mobile terminals communicate, in the mobile communication system. However, with one base station, it is possible to specify only an area, that is, specify only the whereabouts of the terminal, and therefore it is difficult to use this position detecting method in positioning that requires accuracy.

So, there is the following conventional technique as a position detecting method using a plurality of base stations.

Patent Document 1 discloses a position detecting system and apparatus that detect positions by making a terminal build a database of received levels of base stations and by measuring the distances between the terminal and the base stations in parallel, and that reduce the time required for positioning.

Patent Document 1 discloses a position detecting system for measuring the times of arrival of signals (i.e. distance data, that is, pseudo distances) from a plurality of base stations, based on communication between base stations and a terminal, using a base station-mobile terminal wireless communication system for mobile telephones, and for calculating the position according to the principle of triangulation surveying, based on the relationships between the relative positions of individual base stations and the mobile terminal and the absolute positions of the individual base stations. The times of arrival are detected by detecting the times of arrival ("TOA") of signals between the mobile terminal and base stations or by detecting the time differences of arrival ("TDOA") between signals transmitted and received between the mobile terminal and base stations, so that it is possible to perform positioning. Then, the time required for positioning is reduced by measuring received power from a plurality of base stations, building a database of the received power and the above-described times of arrival of signals between base stations and mobile terminal and performing processings of database searching and triangulation surveying in parallel.

Patent Document 2 discloses a distance measuring method in a mobile communication system for measuring the distances between a terminal and base stations (i.e. networks) a plurality of times, selecting the smallest distance data and calculating the position according to the principle of triangulation surveying. Similar to the apparatus disclosed in Patent Document 1, the distance measuring method disclosed in Patent Document 2 performs positioning by triangulation surveying in a base station-mobile terminal wireless communication system for mobile telephones. However, if reflected waves from buildings and so on are used as distance data upon positioning, there is a problem that positioning errors increase. Therefore, the system is configured to measure distance data at a plurality of timings and acquire the smallest distance data.

Patent Document 1: Japanese Patent Application Laid-Open No.2005-123662
Patent Document 2: Japanese Patent Application Laid-Open No.2001-275148

Disclosure of Invention

Problems to be Solved by the Invention

However, in this conventional position detecting system, there is a problem that errors in the calculation of the position of the terminal increase in an environment such as the state in which a terminal moves fast. Further, there are cases where movement makes communication between a terminal and base station difficult, and, in these cases, it is necessary to perform positioning a plurality of times.

That is, conventional positioning is readily applicable to a mobile terminal that does not move or that moves slowly. However, in case where a terminal moves fast and the base station and the mobile terminal are in a specific relative relationship, for example, the mobile terminal moves away from or closer to the base station on the same straight line, there is a problem that errors in the accuracy of positioning increase if the distance data (i.e. pseudo distance) between the base station and terminal is used to perform positioning.

In view of the above, it is therefore an object of the present invention to provide a positioning receiving apparatus and a mobile terminal positioning method for reducing errors in the calculation of the position of a terminal in environment in which the mobile terminal moves fast, and for improving the accuracy of positioning.

Means for Solving the Problem

The positioning receiving apparatus according to the present invention employs a configuration which includes: a pseudo distance calculating section that calculates times of arrival of radio waves based on communication with a plurality of base stations and that calculates pseudo distance data from the plurality of base stations based on the calculated times of arrival of radio waves; a position coordinate calculating section that calculates position coordinates based on the calculated pseudo distance data from the plurality of base stations; a Doppler shift amount calculating section that calculates amounts of Doppler shift of carrier waves from the plurality of base stations, based on the communication with the plurality of base stations; and a controlling section that performs controls for comparing the calculated amounts of Doppler shift with a reference value, and calculating, in the position coordinate calculating section, the position coordinates without using the pseudo distance data from base stations from which greater amounts of Doppler shift than the reference value are calculated.

The positioning receiving apparatus according to the present invention employs a configuration which includes: a pseudo distance calculating section that calculates times of arrival of radio waves based on communication with a plurality of base stations and that calculates pseudo distance data from the plurality of base stations based on the calculated times of arrival of radio waves; a position coordinate calculating section that calculates position coordinates based on the calculated pseudo distance data from the plurality of base stations; a Doppler shift amount calculating section that calculates amounts of Doppler shift of carrier waves from the plurality of base stations, based on the communication with the plurality of base stations; and a controlling section that compares the calculated amounts of Doppler shift with a reference value, applies weight to the pseudo distance data from base stations from which smaller amounts of Doppler shift than the reference value are calculated, according to a time having passed from a time when the pseudo distance data is acquired, and supplies the pseudo distance data to which the weight is applied, to the position coordinate calculating section.

The mobile terminal positioning method according to the present invention includes: calculating times of arrival of radio waves based on communication with a plurality of base stations and calculating pseudo distance data from the plurality of base stations based on the calculated times of arrival of radio waves; calculating position coordinates based on the calculated pseudo distance data from the plurality of base stations; calculating amounts of Doppler shift of carrier waves from the plurality of base stations, based on the communication with the plurality of base stations; and performing controls for comparing the calculated amounts of Doppler shift with a reference value, and calculating the position coordinates without using the pseudo distance data from base stations from which greater amounts of Doppler shift than the reference value are calculated.

The mobile terminal positioning method according to the present invention includes: calculating times of arrival of radio waves based on communication with a plurality of base stations and calculating pseudo distance data from the plurality of base stations based on the calculated times of arrival of radio waves; calculating position coordinates based on the calculated pseudo distance data from the plurality of base stations; calculating amounts of Doppler shift of carrier waves from the plurality of base stations, based on the communication with the plurality of base stations; and comparing the calculated amounts of Doppler shift with a reference value, applying weight to the pseudo distance data from base stations from which smaller amounts of Doppler shift than the reference value a re calculated, according to a time having passed from a time when the pseudo distance data is acquired, and supplying the pseudo distance data to which the weight is applied, to the step of calculating the position coordinates.

Advantageous Effects of Invention

According to the present invention, pseudo distance data from base stations from which greater amounts of Doppler shift than a reference value are calculated, is not used upon triangulation surveying, so that it is possible to reduce errors in the calculation of the position of a terminal in environment in which the mobile terminal moves fast, and improve the accuracy of positioning. Further, even if movement of the terminal makes communication between the terminal and base stations difficult, it is possible to reduce the number of times to perform positioning.

Brief Description of Drawings

FIG.1 shows a configuration of a system for positioning base station apparatuses (BSs) and a terminal (UE) of a positioning receiving apparatus according to Embodiment 1 of the present invention;

FIG.2 is a block diagram showing a configuration of the above terminal (UE) of a positioning receiving apparatus according to Embodiment 1;

FIG.3 is a block diagram showing a configuration of the above base station of a positioning receiving apparatus according to Embodiment 1;

FIG.4 shows the relationship between the positions of the above base stations (BSs) and terminal (UE) of a positioning receiving apparatus according to Embodiment 1, and the relationship of Doppler frequencies of carrier waves;

FIG.5 is a flowchart showing operation control by the above terminal (UE) of a positioning receiving apparatus according to Embodiment 1;

FIG.6 illustrates a method of calculating the position of a terminal (UE) by triangulation surveying by the terminal (UE) according to Embodiment 2 of the present invention;

FIG.7 is a flowchart showing operation control in the above terminal (UE) of a positioning receiving apparatus according to Embodiment 2; and

FIG.8 is a flowchart showing operation control in the terminal (UE) of a positioning receiving apparatus according to Embodiment 3 of the present invention.

Best Mode for Carrying Out the Invention

Hereinafter, embodiments of the present invention will be explained in detail with reference to the accompanying drawings.

(Embodiment 1)

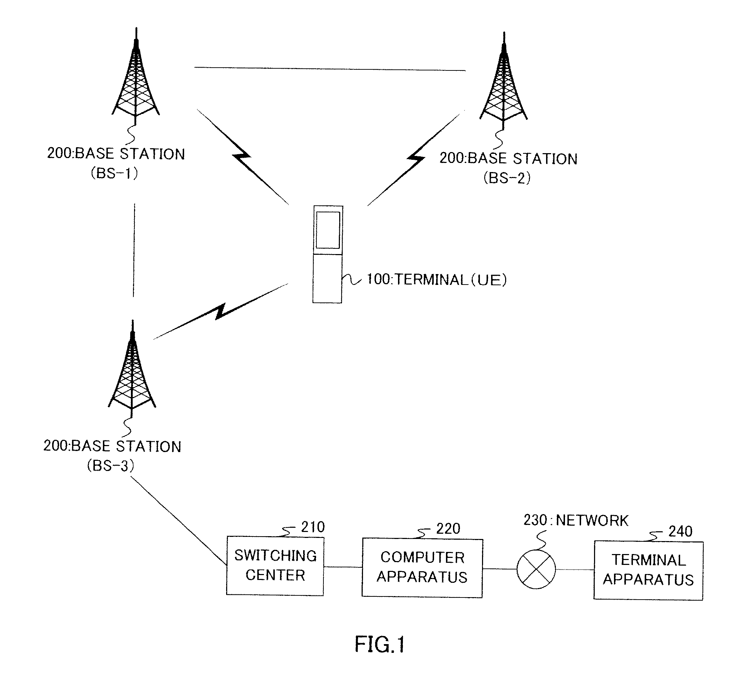

FIG.1 shows a configuration of a system for positioning base stations (BSs) and a terminal (i.e. user equipment ("UE")) of a positioning receiving apparatus according to Embodiment 1 of the present invention. FIG.1 is a functional block diagram showing the configuration. The present embodiment provides an example where a positioning receiving apparatus is applied to a satellite positioning system that supports GPS.

In FIG.1, the position detecting system employs a configuration including terminal (UE) 100, a plurality of base stations 200 (BS-1, BS-2, BS-3, ...) around terminal (UE) 100, switching center 210, computer apparatus 220, network 230 and terminal apparatus 240.

Terminal (UE) 100 is a terminal that can move such as a mobile telephone/PHS (Personal Handy-Phone System), or may be a mobile information terminal such as mobile notebook computers or PDAs (Personal Digital Assistants). A case will be adopted as an example with the present embodiment where terminal (UE) 100 having a positioning receiving apparatus is a mobile telephone.

Terminal (UE) 100 communicates with surrounding base stations 200 (BS-1, BS-2, BS-3, ...), recognizes the base station of the highest received level as the master, and communicates with other terminal apparatus 240 through that base station.

Base stations 200 (BS-1, BS-2, BS-3, ...) perform wireless communication with terminal (UE) 100. Base stations 200 are connected to switching center 210.

Switching center 210 is connected to computer apparatus 220 of a controlling apparatus (not shown).

Computer apparatus 220 can communicate with terminal apparatus 240 such as a computer terminal, through network 230 such as a public telephone network and Internet.

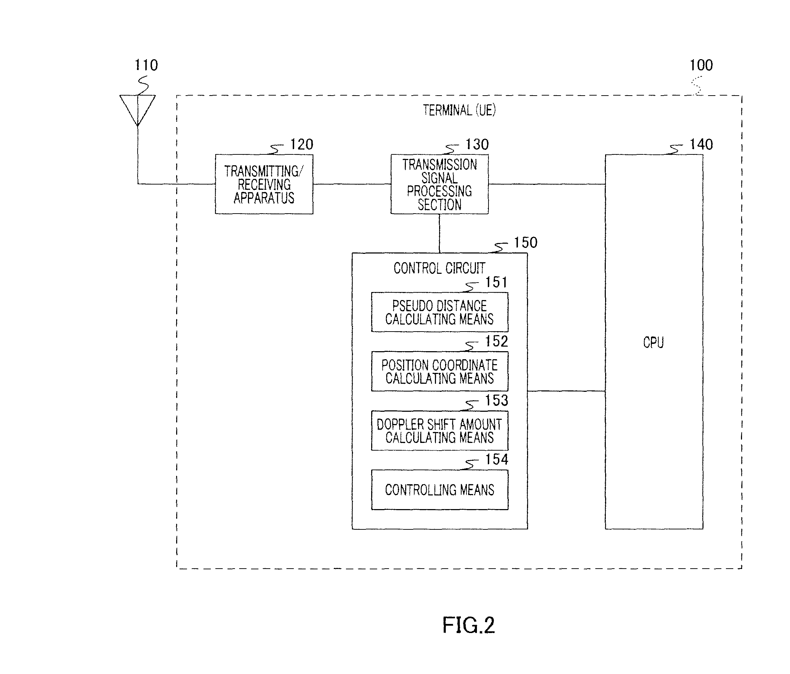

FIG.2 is a block diagram showing a configuration of terminal (UE) 100.

In FIG.2, terminal (UE) 100 having a positioning receiving apparatus employs a configuration including antenna 110, transmitting/receiving apparatus 120, transmission signal processing section 130, CPU 140 and control circuit 150.

Transmitting/receiving apparatus 120 transmits and receives signals to and from base stations 200 through antenna 110. These signals include a control signal required for communication, and data of voice and data communication.

Transmission signal processing section 130 controls transmitting/receiving apparatus 120 to perform processing of signals to transmit and receive the signals, and outputs the signal processing results to CPU 140 and control circuit 150.

CPU 140 is a controlling section that controls the overall apparatus and controls communication of terminal (UE) 100 using a storing section (not shown) that stores a control program and data to use in calculation. Further, CPU 140 leaves controls required for communication, to transmission signal processing section 130.

Control circuit 150 is a controlling section that measures the position of a positioning receiving apparatus based on the signal transmitted and received from transmission signal processing section 130, and employs a configuration including pseudo distance calculating means 151, position coordinate calculating means 152, Doppler shift amount calculating means 153 and controlling means 154.

Pseudo distance calculating means 151 calculates the times of arrival of radio waves based on communication with base stations (BS-1, BS-2, BS-3, ...), and calculates pseudo distance data from the base stations (BS-1, BS-2, BS-3, ...), based on the calculated times of arrival of radio waves.

Position coordinate calculating means 152 calculates position coordinates based on the calculated pseudo distance data from the base stations (BS-1, BS-2, BS-3, ...).

Doppler shift amount calculating means 153 calculates the amounts of Doppler shift of carrier waves from the base stations (BS-1, BS-2, BS-3, ...), based on communication with the base stations (BS-1, BS-2, BS-3, ...).

Controlling means 154 performs controls (controls according to Embodiment 1) for comparing the calculated amounts of Doppler shift with a reference value, and for calculating, in position coordinate calculating means 152, the position coordinates without using pseudo distance data acquired from base stations from which greater amounts of Doppler shift than the reference value are calculated. Further, controlling means 154 performs controls (controls according to Embodiment 2) for applying weight to pseudo distance data acquired from base stations from which greater amounts of Doppler shift than the reference value are calculated, and for supplying the pseudo distance data to which weight is applied, to position coordinate calculating means 152. Furthermore, controlling means 154 performs controls (controls according to Embodiment 3) for comparing the calculated amounts of Doppler shift with the reference value, for applying weight to pseudo distance data acquired from base stations from which smaller amounts of Doppler shift than the reference value are calculated, according to the time having passed from the time when the pseudo distance data was found, and for supplying the pseudo distance data to which weight is applied, to position coordinate calculating means 152.

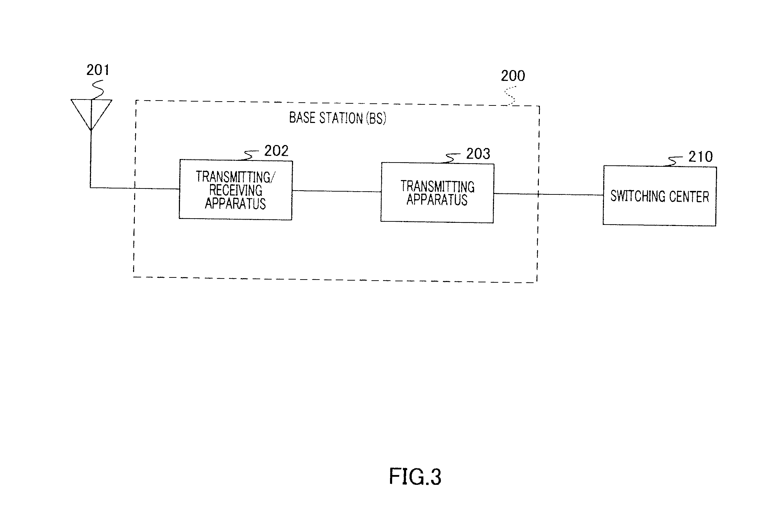

FIG.3 is a block diagram showing a configuration of base station 200. Assume that each base station (BS-1, BS-2, BS-3, ...) employs the same configuration.

In FIG.3, base station 200 has antenna 201, transmitting/receiving apparatus 202, transmitting apparatus 203, and transmitting apparatus 203 is connected to switching center 210.

Transmitting/receiving apparatus 202 transmits and receives signals to and from terminal (UE) 100 through antenna 201. These signals include a control signal required for communication, and data of voice and data communication.

Transmitting apparatus 203 transmits signals received from transmitting/receiving apparatus 202, to switching center 210, and performs controls required for communication from switching center 210.

Hereinafter, the operation of terminal (UE) 100 having a positioning receiving apparatus configured as described above will be explained.

First, the fundamental idea underlying the present invention will be explained.

The terminal (hereinafter referred to as "UE" to explain the principle) calculates the times of arrival of radio waves in transmission-reception (BS ⇔ UE), in reception (BS→UE) or in transmission (UE→BS) between a base station (hereinafter referred to as "BS" to explain the principle) and UE. By multiplying the times of arrival with the speed of light, it is possible to calculate the distances (i.e. pseudo distances) between the individual BSs and the UE. Based on the distances between a plurality of BSs and the UE, it is possible to find the position coordinates of the UE according to the principle of triangulation surveying. When the moving speed of UE increases, Doppler shift seems to work on the frequency of a carrier wave depending on the relationships between the positions of the BSs and UE.

[Method 1]

In communication between individual BSs and UE, the amounts of Doppler shift of carrier waves are calculated by reception processing in UE. In communication between a plurality of BSs and UE, if the amounts of Doppler shift are equal to or greater than a certain reference value (for example, if the absolute values or the average value of the amounts of Doppler shift from a plurality of BSs are equal to or greater than a predetermined value), the relative moving distances from these BSs are decided to be long and pseudo distance data between these BSs and UE is not used to calculate the position of UE.

[Method 2]

In communication between individual BSs and UE, the amounts of Doppler shift of carrier waves are calculated by reception processing in UE. In communication between a plurality of BSs and UE, if the amounts of Doppler shift are equal to or greater than a certain reference value (for example, if the absolute values or the average value of the amounts of Doppler shift from a plurality of BSs are equal to or greater than a predetermined value), the relative moving distances from these BSs are decided to be long and weight is applied to the pseudo distances between these BSs and UE to calculate the position of UE. This weighting reduces the processing for calculating the position of UE.

[Method 3]

In communication between individual BSs and UE, the amounts of Doppler shift of carrier waves are calculated by reception processing in UE. In communication between a plurality of BSs and UE, if the amounts of Doppler shift are equal to or smaller than a certain reference value (for example, if the absolute values or the average value of the amounts of Doppler shift from a plurality of BSs are equal to or lower than a predetermined value), the relative moving distances from these BSs are decided to be short and pseudo distance data between these BSs and UE is not used to calculate the position of the UE. Then, weighting is performed based on the time having passed from the time when pseudo distances between individual BSs and UE were found. When a long time passes, UE is more likely to move, and therefore to calculate the position of the UE, smaller weight is applied to pseudo distances that has passed a long time having passed since they were found.

Next, the principle of positioning using the times of arrival of signals (i.e. distance data) between UE and BSs will be explained.

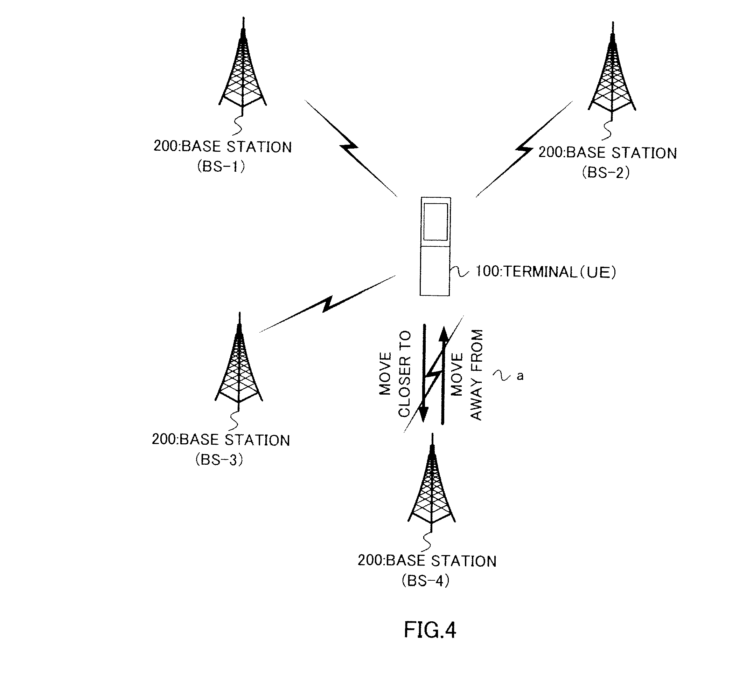

FIG.4 shows the relationship between the positions of base stations (BSs) and a terminal (UE) and the relationship of Doppler frequencies of carrier waves.

In FIG.4, in response to a positioning request from the base station (BS-1), UE calculates pseudo distance data D1, D2, D3, ... and Di between UE and base stations BS-1, BS-2, .... Assuming that the time of arrival from a positioning request between UE and BSs to communication between UE and each base station BS is Ti (where the time of arrival between UE and BS-1 is T1 and the time of arrival between UE and BS-2 is T2) and the speed of light is C, pseudo distance data D1, D2, D3, ... and Di between UE and base stations BS-1, BS-2, ... is determined according to following equation 1.

[1]

$$Di = C * Ti \qquad (i = 1, 2 \cdots) \quad \dots \ (\mathrm{Equation\ 1})$$

$$C: \ \mathrm{speed\ of\ light}$$

Further, assuming that the coordinates for UE are (X,Y,Z) and the coordinates for each BS are (Xi,Yi,Zi), distance Di between two points, that is, between UE and each BS, is determined according to following equation 2.

[2]

$$Di = \sqrt{(Xi - X)^2 + (Yi - Y)^2 + (Zi - Z)^2} \quad \dots \ (\mathrm{Equation\ 2})$$

$$(i = 1, 2, 3, \dots)$$

Above equation 1 is equal to equation 2, and therefore the relationship shown in following equation 3 holds.

[3]

$$\sqrt{(Xi - X)^2 + (Yi - Y)^2 + (Zi - Z)^2} = C * Ti \quad \dots \ (\mathrm{Equation\ 3})$$

$$(i = 1, 2, 3, \dots)$$

Although the position of UE is not known, it is possible to calculate the position of the UE by solving above equation 3 as a simultaneous equation using distance data between the UE and a plurality of BSs (at least three or more base stations).

Note that the time of arrival (Ti) between UE and BS reflects, for example, measurement errors, and therefore errors are generally minimized according to the least square method to find the position of the UE. Further, although there is no problem if time synchronization is established between BSs (as in the 3GPP2 system for mobile telephones), if time synchronization is not established (as in the 3GPP system for mobile telephones), the time difference between base stations leads to errors in the above distance data (i.e. pseudo distance).

Further, when the distance is calculated as described above, similar distance data (i.e. pseudo distance) is also determined by calculating the time difference of arrival based on the timing difference determined with respect to BSs (i.e. between SFN (System Frame Number) and SFN in 3GPP).

Here, as shown in FIG.4a, when UE moves fast, particularly, when UE moves away from or closer to the base station (BS-4) on the same straight line, the amount of Doppler shift of a carrier wave is significant as compared to other base stations (BS-1 to BS-3). Note that, with a conventional example, using distance data (i.e. pseudo distance) between the base station (BS-4) and UE for positioning increases errors in the accuracy of positioning.

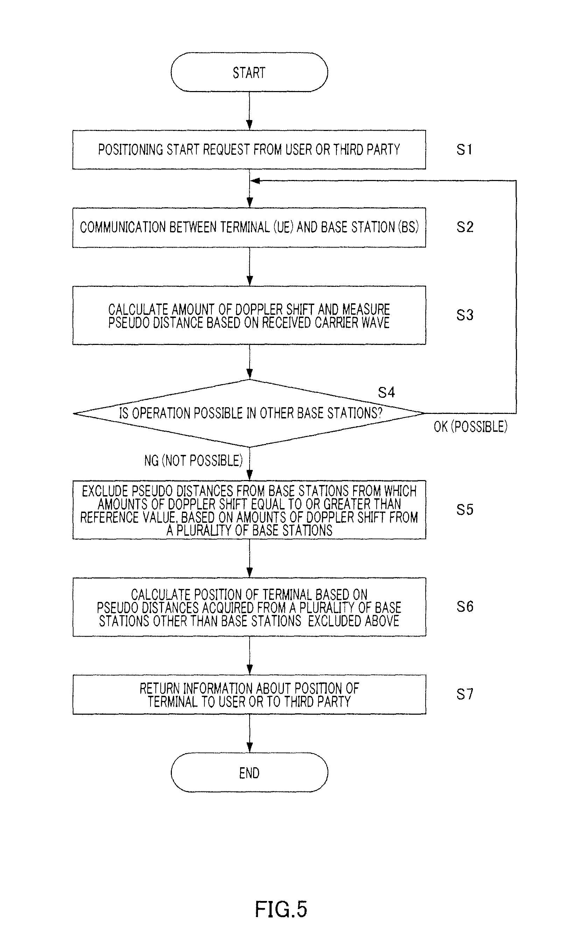

FIG.5 is a flowchart showing operation control of terminal (UE) 100. This flowchart is an operation flowchart of control circuit 150 of terminal (UE) 100.

In step S1, terminal (UE) 100 issues a positioning start request for searching for the position of UE, from the user using UE or a third party.

In step S2, terminal (UE) 100 performs terminal-base station (i.e. UE-BS) communication with base stations (BSs) having received the positioning start request. Signals transmitted to and received from base stations 200 include a control signal required in communication, and data of voice and data communication. Here, assume that communication is performed between UE 100 of FIG.1 and each base station (BS-1, BS-2, BS-3, ...).

In step S3, control circuit 150 of terminal (UE) 100 calculates the amount of Doppler shift from a received carrier wave, and measures the pseudo distance. In this case, pseudo distance calculating means 151 measures the above-described pseudo distance data between BS-1 and terminal (UE) 100. Then, Doppler shift amount calculating means 153 calculates the absolute value of the amount of Doppler shift of a carrier wave when each base station (BS-1, BS-2, BS-3, ...) and terminal (UE) 100 communicate. This calculation is made possible by processing on the terminal (UE) 100 side based on communication from each base station (BS-1, BS-2, BS-3, ...) to terminal (UE) 100, or by processing on each base station (BS-1, BS-2, BS-3, ...) side based on communication from terminal (UE) 100 to each base station (BS-1, BS-2, BS-3, ...). In FIG.2, based on a signal (i.e. carrier wave) received at antenna 110, Doppler shift amount calculating means 153 of control circuit 150 of terminal (UE) 100 calculates the absolute value of the amount of Doppler shift of a carrier wave by means of transmitting/receiving apparatus 120, transmission signal processing section 130 and CPU 140. This absolute value of the amount of Doppler shift increases due to the increase in the ground speed of UE, and, when, for example, UE moves at 100 kilometers per hour, the absolute value of the amount of Doppler shift becomes approximately 0.092 ppm according to the speed of light ($3.0* 10^8$ m/s).

This operation is repeated until communication is made possible between UE 100 and each base station (BS-1, BS-2, BS-3, ...). By repeating the operation as described above, it is possible to find the absolute values of the amounts of Doppler shift of carrier waves from a plurality of base stations. Note that it is necessary to perform the above operation with respect to at least three BSs to perform triangulation surveying.

Back to the flowchart of FIG.5, controlling means 154 of control circuit 150 decides whether or not the above operation is possible in other base stations, and, if the operation is possible in other base stations, the step returns to above step S2 and, if the above operation is not possible in the other base stations, the step proceeds to above step S5.

In step S5, controlling means 154 of control circuit 150 excludes pseudo distances from base stations 200 from which the amounts of Doppler shift equal to or greater than the reference value are calculated, based on the amounts of Doppler shift of carrier waves from a plurality of base stations (BS-1, BS-2, BS-3, ...). The method of deciding a reference value might use, for example, (1) the average value, (2) the average value and offset value $\alpha$, (3) fixed value, and (4) the average of past record values. Here, based on the absolute values of the amounts of Doppler shift from a plurality of base stations (BS-1, BS-2, BS-3, ...), the average value of the absolute values of the amounts of Doppler shift, the average value and the offset value, or a fixed value (for example, 0.1 ppm) are set. The distance data (i.e. pseudo distances) between terminal (UE) 100 and base stations 200 from which results of greater absolute values of amounts of Doppler shift than the reference value are found, is not used to calculate the position based on above equation 3, assuming that UE is moving fast with respect to those BSs.

In step S6, position coordinate calculating means 152 of control circuit 150 calculates the position of terminal (UE) 100 based on the pseudo distances acquired from a plurality of base stations other than the base stations excluded above. To be more specific, based on above equation 3 for calculating the position coordinates of BSs and distance data (i.e. pseudo distance) between UE 100 and base station 200 within a range not exceeding the above reference value, position coordinate calculating means 152 minimizes the residual between these calculation results according to the least square method to find the position coordinates of UE.

In step S7, controlling means 154 of control circuit 150 provides the result of the position coordinates acquired as described above, to the user of UE or to a third party as position information, and the flow is finished.

As described above, according to the present embodiment, terminal (UE) 100 calculates pseudo distance data and the amounts of Doppler shift of carrier waves from the base stations (BS-1, BS-2, BS-3, ...) based on communication with the base stations (BS-1, BS-2, BS-3, ...), and calculates the position coordinates based on the pseudo distance data from the base stations (BS-1, BS-2, BS-3, ...), without using the pseudo distance data acquired from base stations from which greater amounts of Doppler shift than the reference value are calculated, so that it is possible to improve the accuracy of positioning UE by performing triangulation surveying without using the pseudo distance data from BSs from which greater absolute values of the amounts of Doppler shift are found. By this means, it is possible to reduce errors in the calculation of the position of a terminal in environment in which terminal (UE) 100 moves fast, and improve the accuracy of positioning. Further, even if movement of terminal (UE) 100 makes communication between terminal 100 and base stations difficult, it is possible to reduce the number of times to perform positioning.

(Embodiment 2)

The configuration of the system for positioning base stations (BSs) and a terminal (UE) of a positioning receiving apparatus according to Embodiment 2, is the same as in FIG.1 or FIG.4, and therefore explanation thereof will be omitted.

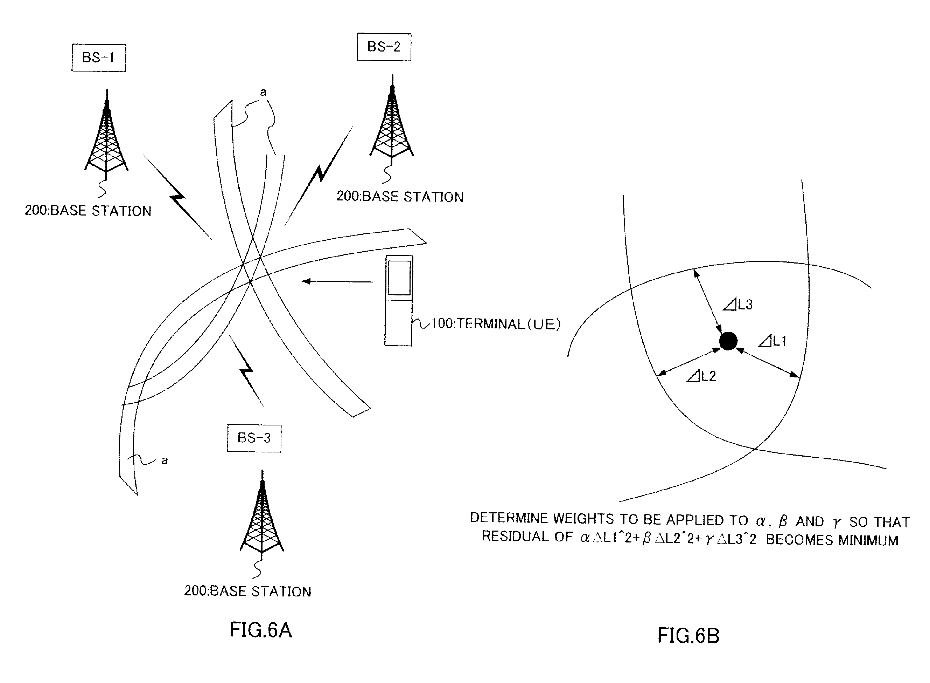

FIG.6 explains the method of calculating the position of the terminal (UE) by triangulation surveying by terminal (UE) 100 according to Embodiment 2 of the present invention, and FIG.6A shows pseudo distances between base stations (BSs) and a terminal (UE) and FIG.6B shows an example of calculating the position.
FIG.6A shows circles using distance data (i.e. pseudo distances) from base stations (BS-1, BS-2, BS-3, ...) as a radius upon triangulation surveying, and UE is positioned at the intersection of those circles. Note that actual distance data reflects errors, and, actually, the intersection of the circles has a certain range (see FIG.6A a).
With Embodiment 1, pseudo distance data between UE 100 and base stations 200 from which greater absolute values of the amounts of Doppler shift than a certain reference value are found, is not used to calculate the position. With Embodiment 2, as will be described below, weight is applied to pseudo distance data between UE 100 and base station 200 from which greater absolute values of the amounts of Doppler shift than a certain reference value are found. The residual is minimized according to the least square method to find the position of UE according to the above-described simultaneous equation.
Here, in the calculation equation for minimizing the residual, weight is applied to residual coefficients related to BSs from which greater absolute values of the amounts of Doppler shift than a reference value are found.
As a weighting method, in order to calculate the position, sequentially utilizing the absolute values of the amounts of Doppler shift in positioning computation in order from smaller absolute values is continued, until the position is found.
Further, another weighting method applies weights to coefficients $\alpha$, $\beta$, $\gamma$, ... as shown in following equation 4, and increases weights when the absolute value of the amount of Doppler shift is greater.
[4]

$$a\Delta L1^2 + \beta\Delta L2^2 + \gamma\Delta L3^2 + \dots \quad \dots \quad (\mathrm{E\,q\,u\,a\,t\,i\,o\,n}\ 4)$$

$\Delta$Li (I=1, 2, ...) of above equation 4 indicates the difference between the true coordinates of UE and the radius drawn based on distance data (i.e. pseudo distance) from each base station (BS-1, BS-2, BS-3, ...).
By applying, for example, the least square method using the above-described simultaneous equation based on these items of information, the position coordinates of UE are determined.

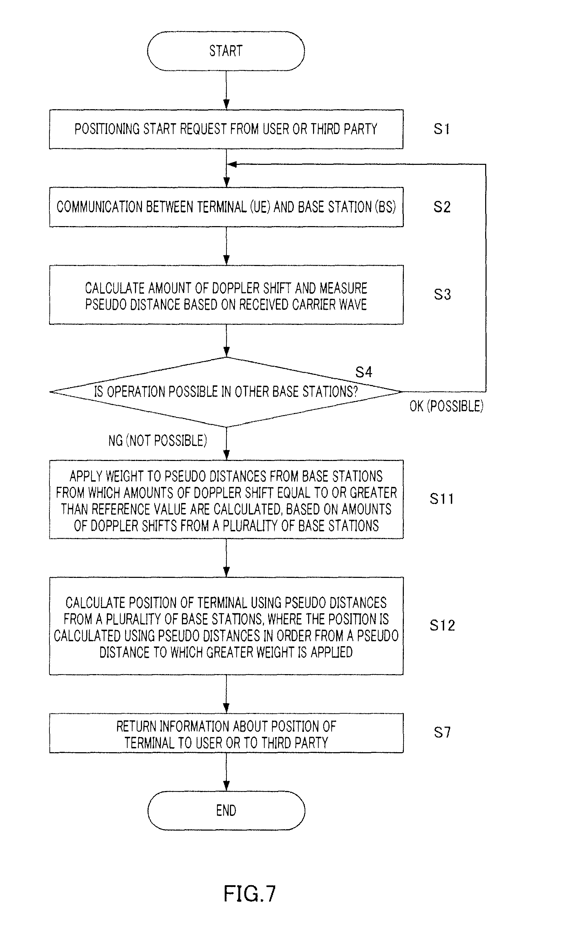

FIG.7 is a flowchart showing operation control in terminal (UE) 100 according to Embodiment 2 of the present invention. The same step number will be assigned to the same processing as in the operation control flowchart of FIG. 5, and explanation thereof will be omitted.
If the above operation is not possible in other base stations in step S4, the step proceeds to step S11.
In step S11, controlling means 154 of control circuit 150 applies weight to pseudo distances of base stations 200 from which the absolute values of the amounts of Doppler shift equal to or greater than a reference value are found, based on the amounts of Doppler shift of carrier waves from a plurality of base stations (BS-1, BS-2, BS-3, ...). The method of deciding a reference value might use, for example, (1) the average value, (2) the average value and offset value $\alpha$, (3) fixed value and (4) the average of past record values.
In step S12, position coordinate calculating means 152 of control circuit 150 calculates the position of terminal (UE) 100 based on the pseudo distances acquired from a plurality of base stations other than the base stations excluded above. Note that the position is calculated using pseudo distances in order from pseudo distances to which greater weight is applied. To be more specific, to find the position of UE according to the above-described simultaneous equation, position coordinate calculating means 152 minimizes the residual according to the least square method to calculate the position.
In step S7, controlling means 154 of control circuit 150 provides the result of the position coordinates acquired as described above, to the user of UE or to a third party as position information through CPU 140, and the flow is finished.
As described above, according to the present embodiment, weight is applied to pseudo distance data acquired from base stations from which greater amounts of Doppler shift than a reference value are calculated, and the pseudo distance data to which weight is applied is supplied to position coordinate calculating means 152, so that it is possible to improve the accuracy of positioning terminal (UE) 100 by, upon triangulation surveying, applying weight to pseudo distance data from base stations (BSs) from which greater absolute values of the amounts of Doppler shift are found. With Embodiment 1, pseudo distance data between UE 100 and base stations 200 from which greater absolute values of amounts of Doppler shift than a certain reference value are found, is not used to calculate the position. With the present embodiment, by applying weight to this pseudo distance data and using this data, it is possible to further improve the accuracy of positioning terminal (UE) 100 compared to Embodiment 1.

(Embodiment 3)

The configuration of the system for positioning base stations (BSs) and a terminal (UE) of a positioning receiving apparatus according to Embodiment 3, is the same as in FIG.1 or FIG.4, and therefore explanation thereof will be omitted.

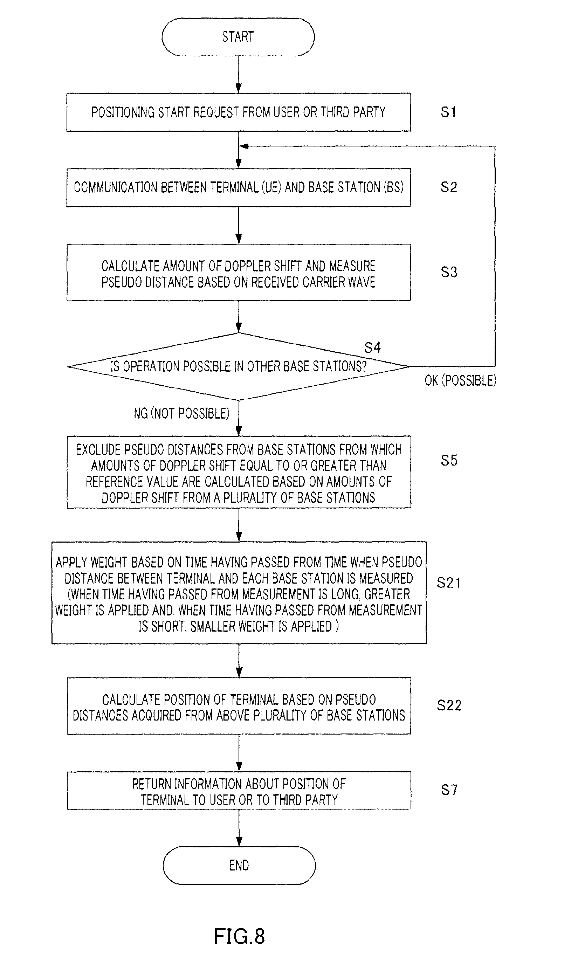

FIG.8 is a flowchart showing operation control in terminal (UE) 100 according to Embodiment 3 of the present invention. The same step numbers will be assigned to the same processing as in the operation control flowchart of FIG. 5, and explanation thereof will be omitted.
Based on a positioning start request, pseudo distance data from each base station (BS-1, BS-2, BS-3, ...) and UE, and the absolute values of the amounts of Doppler shift of carrier waves of individual base stations, are calculated. Similar to Embodiment 1, pseudo distance data between UE and BSs from which absolute values of the amounts of Doppler shift equal to or greater than a certain reference value are found, is not used to calculate the position.
In step S21, controlling means 154 of control circuit 150 performs weighting based on the time having passed from the time when a pseudo distance between each base station (BS-1, BS-2, BS-3, ...) and terminal 100 was measured. When a time having passed from the measurement is short, greater weight is applied, and, when a time having passed from the measurement is long, smaller weight is applied. To be more specific, controlling means 154 associates pseudo distance data from which the absolute values of the amounts of Doppler shift equal to or less than a certain reference value are found and which must be used to calculate the position, with the time when this pseudo distance data was found. For example, the CPU that calculates the position stores the associations between distance data and the times. Then, UE measures a pseudo distance to each base station (BS-1, BS-2, BS-3, ...) again on a regular basis (for example, every one second). Then, if a certain time passes (for example, five seconds pass) after past distance data was found between BSs and UE (between UE and BSs from which lower absolute values of the amounts of Doppler shift than a certain reference value are found), this distance data between those BSs and UE is not used to perform positioning, or weight is applied to coefficients upon calculation according to the minimum square method as in Embodiment 2.
In step S22, position coordinate calculating means 152 of control circuit 150 calculates the position of terminal (UE) 100 based on pseudo distances acquired from the above plurality of base stations.
In step S7, controlling means 154 of control circuit 150 provides the result of the position coordinates, to the user of UE or to a third party as position information through CPU 140, and the flow is finished.
In this way, the calculated amounts of Doppler shift are compared with the reference value, weight is applied to pseudo distance data acquired from base stations from which smaller amounts of Doppler shift than the reference value are calculated, based on the time having passed from the time when pseudo distance data was found, and the pseudo distance data to which weight is applied is supplied to position coordinate calculating means 152, so that it is possible to improve the accuracy of positioning by calculating the position taking into account the time having passed from the measurement of distance data between terminal (UE) 100 and base stations (BSs) from which the absolute values of the amounts of Doppler shift equal to or less than a certain reference value, are found. With the present embodiment, by implementing the present embodiment in combination with Embodiment 1 or Embodiment 2, it is possible to further improve the accuracy of positioning in Embodiments 1 and 2.
The above explanation is an illustration of a preferable embodiment of the present invention, and the scope of the present invention is not limited to this.
For example, although, with the above embodiments, the position of terminal (UE) 100 is calculated based on pseudo distances between base stations (BSs) and the terminal (UE), the present invention can be implemented by hybrid positioning that uses the present invention in combination with the positioning system which uses positioning satellites such as GPS.
Further, although the names "positioning receiving apparatus" and "mobile terminal positioning method" are used for ease of explanation, the names "positioning system," "position measuring method" and the like are naturally possible.
Furthermore, each circuit section constituting the above positioning receiving apparatus, the scheme and the connection method thereof, and types of a transmission signal processing section are not limited to the above-described embodiment.

Industrial Applicability

The positioning receiving apparatus and the mobile terminal positioning method are useful in communication systems that perform transmission and reception in a radio system between mobile terminals and base stations. Further, in addition to the radio system between mobile terminals and base stations, the present invention is also useful 1 in communication systems combined with the positioning system using positioning satellites such as GPS. For example, the present invention is widely applicable not only to GPS and the Galileo system, but also to a plurality of positioning systems such as GLONAS of Russia, WASS of the Untied States of America, MSAS of Japan and EGNOS of Europe that transmit a plurality of satellite signals subjected to spectrum spreading according to a plurality of synchronized modulation codes.

**Claims**

1. A positioning receiving apparatus comprising:

   a pseudo distance calculating section that calculates times of arrival of radio waves based on communication with a plurality of base stations and that calculates pseudo distance data from the plurality of base stations based on the calculated times of arrival of radio waves;
   a position coordinate calculating section that calculates position coordinates based on the calculated pseudo distance data from the plurality of base stations;
   a Doppler shift amount calculating section that calculates amounts of Doppler shift of carrier waves from the plurality of base stations, based on the communication with the plurality of base stations; and
   a controlling section that performs controls for comparing the calculated amounts of Doppler shift with a reference value, and calculating, in the position coordinate calculating section, the position coordinates without using the pseudo distance data from base stations from which greater amounts of Doppler shift than the reference value are calculated.

2. The positioning receiving apparatus according to claim 1, wherein the controlling section sets a predetermined fixed value as the reference value.

3. The positioning receiving apparatus according to claim 1, wherein the controlling section sets an average value of the calculated amounts of Doppler shift as the reference value.

4. The positioning receiving apparatus according to claim 1, wherein the controlling section sets a value adding or subtracting a predetermined offset value to or from an average value of the calculated amounts of Doppler shift, as the reference value.

5. The positioning receiving apparatus according to claim 1, wherein the controlling section applies a weight to the pseudo distance data from base stations from which greater amounts of Doppler shift than a reference value are calculated, and supplies the pseudo distance data to which the weight is applied, to the position coordinate calculating section.

6. A positioning receiving apparatus comprising:

   a pseudo distance calculating section that calculates times of arrival of radio waves based on communication with a plurality of base stations and that calculates pseudo distance data from the plurality of base stations based on the calculated times of arrival of radio waves;
   a position coordinate calculating section that calculates position coordinates based on the calculated pseudo distance data from the plurality of base stations;
   a Doppler shift amount calculating section that calculates amounts of Doppler shift of carrier waves from the plurality of base stations, based on the communication with the plurality of base stations; and
   a controlling section that compares the calculated amounts of Doppler shift with a reference value, applies weight to the pseudo distance data from base stations from which smaller amounts of Doppler shift than the reference value are calculated, according to a time having passed from a time when the pseudo distance data is acquired, and supplies the pseudo distance data to which the weight is applied, to the position coordinate calculating section.

7. The positioning receiving apparatus according to claim 6, wherein the controlling section sets a predetermined fixed value as the reference value.

8. The positioning receiving apparatus according to claim 6, wherein the controlling section sets an average value of the calculated amounts of Doppler shift as the reference value.

9. The positioning receiving apparatus according to claim 6, wherein the controlling section sets a value adding or subtracting a predetermined offset value to or from an average value of the calculated amounts of Doppler shift, as the reference value.

10. A mobile terminal positioning method comprising the steps of:

   calculating times of arrival of radio waves based on communication with a plurality of base stations and calculating pseudo distance data from the plurality of base stations based on the calculated times of arrival of radio waves;
   calculating position coordinates based on the calculated pseudo distance data from the plurality of base stations;
   calculating amounts of Doppler shift of carrier waves from the plurality of base stations, based on the communication with the plurality of base stations; and
   performing controls for comparing the calculated amounts of Doppler shift with a reference value, and calculating the position coordinates without using the pseudo distance data from base stations from which greater amounts of Doppler shift than the reference value are calculated.

11. A mobile terminal positioning method comprising the steps of:

   calculating times of arrival of radio waves based on communication with a plurality of base stations and calculating pseudo distance data from the plurality of base stations based on the calculated times of arrival of radio waves;
   calculating position coordinates based on the calculated pseudo distance data from the plurality of base stations;
   calculating amounts of Doppler shift of carrier waves from the plurality of base stations, based on the communication with the plurality of base stations; and
   comparing the calculated amounts of Doppler shift with a reference value, applying weight to the pseudo distance data from base stations from which smaller amounts of Doppler shift than the reference value are calculated, according to a time having passed from a time when the pseudo distance data is acquired, and supplying the pseudo distance data to which the weight is applied, to the step of calculating the position coordinates.

**Amended claims under Art. 19.1 PCT**

1. (Amended)
A positioning receiving apparatus comprising:

   a pseudo distance calculating section that calculates times of arrival of radio waves based on communication with a plurality of base stations and that calculates pseudo distance data from the plurality of base stations based on the calculated times of arrival of radio waves;
   a position coordinate calculating section that calculates position coordinates based on the calculated pseudo distance data from the plurality of base stations;
   a Doppler shift amount calculating section that calculates amounts of Doppler shift of carrier waves from the plurality of base stations, based on the communication with the plurality of base stations; and
   a controlling section that compares the calculated amounts of Doppler shift with a reference value, applies weight to the pseudo distance data acquired from base stations from which smaller amounts of Doppler shift than the reference value are calculated, according to a time having passed from a time when the pseudo distance data is acquired, and supplies the pseudo distance data to which the weight is applied, to the position coordinate calculating section.

2. (Amended)
The positioning receiving apparatus according to claim 1, wherein the controlling section sets a predetermined fixed value as the reference value.

3. (Amended)
The positioning receiving apparatus according to claim 1, wherein the controlling section sets an average value of the calculated amounts of Doppler shift as the reference value.

4. (Amended)
   The positioning receiving apparatus according to claim 1, wherein the controlling section sets a value adding or subtracting a predetermined offset value to or from an average value of the calculated amounts of Doppler shift, as the reference value.

5. (Amended)
   A mobile terminal positioning method comprising the steps of:

   calculating times of arrival of radio waves based on communication with a plurality of base stations and calculating pseudo distance data from the plurality of base stations based on the calculated times of arrival of radio waves;
   calculating position coordinates based on the calculated pseudo distance data from the plurality of base stations;
   calculating amounts of Doppler shift of carrier waves from the plurality of base stations, based on the communication with the plurality of base stations; and
   comparing the calculated amounts of Doppler shift with a reference value, applying weight to the pseudo distance data acquired from base stations from which smaller amounts of Doppler shift than the reference value are calculated, according to a time having passed from a time when the pseudo distance data is acquired, and supplying the pseudo distance data to which the weight is applied, to the step of calculating the position coordinates.

6. (Canceled)

7. (Canceled)

8. (Canceled)

9. (Canceled)

10. (Canceled)

11. (Canceled)

200:BASE STATION (BS-1)

200:BASE STATION (BS-2)

100:TERMINAL (UE)

200:BASE STATION (BS-3)

210 SWITCHING CENTER

220 COMPUTER APPARATUS

230:NETWORK

240 TERMINAL APPARATUS

FIG.1

EP 2 214 031 A1

FIG.2

FIG.3

200:BASE STATION
(BS-1)

200:BASE STATION
(BS-2)

100:TERMINAL(UE)

MOVE CLOSER TO

MOVE AWAY FROM

a

200:BASE STATION
(BS-3)

200:BASE STATION
(BS-4)

FIG.4

START

POSITIONING START REQUEST FROM USER OR THIRD PARTY | S1

COMMUNICATION BETWEEN TERMINAL (UE) AND BASE STATION (BS) | S2

CALCULATE AMOUNT OF DOPPLER SHIFT AND MEASURE PSEUDO DISTANCE BASED ON RECEIVED CARRIER WAVE | S3

S4
IS OPERATION POSSIBLE IN OTHER BASE STATIONS?

OK (POSSIBLE)

NG (NOT POSSIBLE)

EXCLUDE PSEUDO DISTANCES FROM BASE STATIONS FROM WHICH AMOUNTS OF DOPPLER SHIFT EQUAL TO OR GREATER THAN REFERENCE VALUE, BASED ON AMOUNTS OF DOPPLER SHIFT FROM A PLURALITY OF BASE STATIONS | S5

CALCULATE POSITION OF TERMINAL BASED ON PSEUDO DISTANCES ACQUIRED FROM A PLURALITY OF BASE STATIONS OTHER THAN BASE STATIONS EXCLUDED ABOVE | S6

RETURN INFORMATION ABOUT POSITION OF TERMINAL TO USER OR TO THIRD PARTY | S7

END

FIG.5

BS-1

BS-2

200:BASE STATION

a

200:BASE STATION

100:TERMINAL(UE)

$\triangle$L3

$\triangle$L1

$\triangle$L2

BS-3

a

200:BASE STATION

DETERMINE WEIGHTS TO BE APPLIED TO $\alpha$, $\beta$ AND $\gamma$ SO THAT
RESIDUAL OF $\alpha \triangle L1^{\wedge}2 + \beta \triangle L2^{\wedge}2 + \gamma \triangle L3^{\wedge}2$ BECOMES MINIMUM

FIG.6A

FIG.6B

START

POSITIONING START REQUEST FROM USER OR THIRD PARTY — S1

COMMUNICATION BETWEEN TERMINAL (UE) AND BASE STATION (BS) — S2

CALCULATE AMOUNT OF DOPPLER SHIFT AND MEASURE PSEUDO DISTANCE BASED ON RECEIVED CARRIER WAVE — S3

S4
IS OPERATION POSSIBLE IN OTHER BASE STATIONS?

OK (POSSIBLE)

NG (NOT POSSIBLE)

APPLY WEIGHT TO PSEUDO DISTANCES FROM BASE STATIONS FROM WHICH AMOUNTS OF DOPPLER SHIFT EQUAL TO OR GREATER THAN REFERENCE VALUE ARE CALCULATED, BASED ON AMOUNTS OF DOPPLER SHIFTS FROM A PLURALITY OF BASE STATIONS — S11

CALCULATE POSITION OF TERMINAL USING PSEUDO DISTANCES FROM A PLURALITY OF BASE STATIONS, WHERE THE POSITION IS CALCULATED USING PSEUDO DISTANCES IN ORDER FROM A PSEUDO DISTANCE TO WHICH GREATER WEIGHT IS APPLIED — S12

RETURN INFORMATION ABOUT POSITION OF TERMINAL TO USER OR TO THIRD PARTY — S7

END

FIG.7

START

| | |
|---|---|
| POSITIONING START REQUEST FROM USER OR THIRD PARTY | S1 |

| | |
|---|---|
| COMMUNICATION BETWEEN TERMINAL (UE) AND BASE STATION (BS) | S2 |

| | |
|---|---|
| CALCULATE AMOUNT OF DOPPLER SHIFT AND MEASURE PSEUDO DISTANCE BASED ON RECEIVED CARRIER WAVE | S3 |

S4

IS OPERATION POSSIBLE IN OTHER BASE STATIONS?

OK (POSSIBLE)

NG (NOT POSSIBLE)

| | |
|---|---|
| EXCLUDE PSEUDO DISTANCES FROM BASE STATIONS FROM WHICH AMOUNTS OF DOPPLER SHIFT EQUAL TO OR GREATER THAN REFERENCE VALUE ARE CALCULATED BASED ON AMOUNTS OF DOPPLER SHIFT FROM A PLURALITY OF BASE STATIONS | S5 |

| | |
|---|---|
| APPLY WEIGHT BASED ON TIME HAVING PASSED FROM TIME WHEN PSEUDO DISTANCE BETWEEN TERMINAL AND EACH BASE STATION IS MEASURED (WHEN TIME HAVING PASSED FROM MEASUREMENT IS LONG, GREATER WEIGHT IS APPLIED AND, WHEN TIME HAVING PASSED FROM MEASUREMENT IS SHORT, SMALLER WEIGHT IS APPLIED ) | S21 |

| | |
|---|---|
| CALCULATE POSITION OF TERMINAL BASED ON PSEUDO DISTANCES ACQUIRED FROM ABOVE PLURALITY OF BASE STATIONS | S22 |

| | |
|---|---|
| RETURN INFORMATION ABOUT POSITION OF TERMINAL TO USER OR TO THIRD PARTY | S7 |

END

FIG.8

## INTERNATIONAL SEARCH REPORT

| | International application No. |
|---|---|
| | PCT/JP2007/070933 |

A. CLASSIFICATION OF SUBJECT MATTER
*G01S5/14(2006.01)i*

According to International Patent Classification (IPC) or to both national classification and IPC

B. FIELDS SEARCHED

Minimum documentation searched (classification system followed by classification symbols)
G01S5/00-5/30, H04Q7/00-7/38, H04B7/00-7/26

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-339070 A (Hitachi, Ltd.),<br>28 November, 2003 (28.11.03),<br>Column 12, lines 11 to 20<br>& US 2004/0198387 A1 | 1-4,10<br>5-9,11 |
| Y<br>A | JP 2004-120586 A (Matsushita Electric<br>Industrial Co., Ltd.),<br>15 April, 2004 (15.04.04),<br>Par. Nos. [0014] to [0015]<br>(Family: none) | 1-4,10<br>5-9,11 |
| A | JP 11-118903 A (Matsushita Electric Industrial<br>Co., Ltd.),<br>30 April, 1999 (30.04.99),<br>Full text; all drawings<br>(Family: none) | 1-11 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 December, 2007 (18.12.07) | Date of mailing of the international search report<br>08 January, 2008 (08.01.08) |
|---|---|
| Name and mailing address of the ISA/<br>Japanese Patent Office | Authorized officer |
| Facsimile No. | Telephone No. |

Form PCT/ISA/210 (second sheet) (April 2007)

21

**EP 2 214 031 A1**

| INTERNATIONAL SEARCH REPORT | International application No. |
|---|---|
| | PCT/JP2007/070933 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-111675 A (Nippon Steel Corp.), 25 April, 1995 (25.04.95), Par. Nos. [0015] to [0016]; all drawings & US 5548296 A & EP 639930 A & CA 2119699 A | 1-11 |
| A | JP 2003-533063 A (Ericsson Inc.), 05 November, 2003 (05.11.03), Par. Nos. [0044] to [0045] & WO 1999/061934 A & US 6252543 B & EP 1088243 A & BR 9910742 A & CN 1309775 A & AU 756508 B | 1-11 |
| A | JP 2002-291026 A (Pioneer Corp.), 04 October, 2002 (04.10.02), Full text; all drawings & US 2002/183071 A1 & EP 1245963 A & CN 1388715 A | 1-11 |
| A | JP 2003-521134 A (SigmaOne Communications Corp.), 08 July, 2003 (08.07.03), Par. No. [0041] & WO 2000/011804 A & US 2001/053698 A1 & US 6246884 B & EP 1114509 A & AU 5780399 A & CA 2340401 A | 1-11 |

Form PCT/ISA/210 (continuation of second sheet) (April 2007)

22

**EP 2 214 031 A1**

**Patent documents cited in the description**

- JP 2005123662 A
- JP 2001275148 A